# EUROPEAN PATENT APPLICATION

(11) **EP 1 391 978 A1**
(43) Date of publication of application: **25.02.2004**
(21) Application number: 03405572.3
(22) Date of filing: 31.07.2003
(51) Int. Cl.: H02K 15/00

(54) **Method of dismantling a cooling tube in a stator tooth and tool used therefore**

(30) Priority: 22.08.2002 SE 0202488
(71) Applicant: ALSTOM (Switzerland) Ltd, 5401 Baden (CH)
(72) Inventor: Jonas, Ivan, 72355 Västeras (SE); Larsson, Bertil, 72476 Västeras (SE)

(57) **Abstract**

The invention concerns a method of dismantling a cooling tube of polymer material and an elongate cutting tool used in said method. According to the method said tube being fixed in an axially running cooling duct in a stator tooth of a stator of a high-voltage rotating electric machine is cut at an axial level close to the stator at both ends of the stator tooth. Then the cutting tool having a radially protruding cutting edge is inserted into the cut tube at one of said ends, said tool being forced through the tube along said duct thereby slitting the tube from inside. Thereafter the slit tube is pulled out of the duct with a twisting movement that causes breakage of the tube wall along the slit and thus reduction of the tube diameter.

## Description

The present invention concerns a method of dismantling a cooling tube of polymer material, said tube being fixed in an axially running cooling duct in a stator tooth of a stator of a high-voltage rotating electric machine, which has a winding comprising an insulation system including semi conducting layers. The invention also concerns a cutting tool used in said method.

A high-voltage rotating electric machine of the type referred to is known from WO 97/45914. The stator of that machine is made of laminated sheet steel and has slots for the stator winding. The slots are defined by stator teeth in which ducts for axially extending cooling tubes are formed. A cooling tube made of polymer material runs through these ducts entering and leaving the ducts at both ends of the stator. The tube is embedded in the ducts by means of some kind of glue in order to ensure good heat transfer when coolant is circulated there through.

If the cooling tube gets damaged or leaks, it has to be exchanged. In order to do so the damaged tube has first of all to be pulled out of the ducts inside the stator teeth. The pulling out is however obstructed by said glue embedding the tube in the ducts, and therefore one usually tries to drill the damaged tube out of the duct.

Because of the long and narrow ducts this in practice turns out to be a fairly difficult and time consuming operation. Thus, a drill can easily deviate from the planed direction and damage the laminated sheets of the stator, and in addition the removal of the borings is hard to accomplish without interrupting the drilling several times in order to clean the duct by pulling out the drill.

In the light of the above it is an object of the invention to obviate the problems involved with the removal of a damaged cooling tube and to provide a method as well as a tool rendering quick and safe removal possible.

According to the invention this is achieved by a method according to the preamble, the method being characterised in that said tube is cut at an axial level close to the stator at both ends of the stator tooth, that an elongate cutting tool having a radially protruding cutting edge is inserted into the cut tube at one of said ends, that the cutting tool is forced through the tube along said duct thereby slitting the tube from inside, and that the slit tube is pulled out of the duct with a twisting movement that causes breakage of the tube wall along the slit and thus reduction of the tube diameter.

The tool used with the method according to the invention is a cutting tool that comprises an elongate body which is insertable into said tube and has a substantially radially protruding cutting edge for cutting a slit into the inner wall of said tube while being forced through the latter.

By slitting the tube no borings are produced clogging the duct in which the tube is embedded. Thus, a tube extending through a duct can be prepared for removal in a single sweep of the tool and thereafter be removed in a simple way by twisting, whereby the tube diameter is reduced and its contact with the glue along the duct walls is broken.

According to a preferred embodiment of the method the cutting tool while being forced through the tube is rotated round its longitudinal axis in order to create a helical slit. The advantage of this is that the helical slit makes the twisting of the tube a lot easier.

Preferably the twisting movement is caused by attaching a point at an end of the helically slit tube to a rod inserted therein and by turning the rod while pulling it out of said duct. In that way the slit tube forms a helically wound ribbon around said rod being easily extractable from the duct.

The cutting edge of the cutting tool according to the invention preferably forms part of a plane-like structure with a shavings evacuation aperture in said elongate body. The advantage of this solution is that removing of a part of the tube wall facilitates twisting of the slit tube.

In order to avoid clogging of the tool with the shavings produced by the plane-like structure, the elongate body of the tool preferably is hollow and has a bottom opening for the shavings. Because the shavings are evacuated via the tool, there is neither a risk for the shavings clogging the duct.

Preferably the cutting edge of the tool is inclined in order to impart a rotating movement to said elongate body while the latter is being forced through said tube. In that way the preferred helical slit is produced in a quite simple fashion.

Preferably the elongate body of the tool is circular cylindrical and has a diameter fitting an inner diameter of said tube. By fitting the inner diameter of the tool the elongate body guides the tool exactly through the tube. This renders it possible to adapt the cutting edge of the tool to the wall thickness of the tube without risking a collision of the cutting edge with the laminated sheets of the stator.

A preferred embodiment of the method and the cutting tool according to the invention is described in the following with reference to the accompanying schematic drawing.

In the drawing:
Fig. 1 is a perspective view of a cutting tool according to the invention;
Fig. 2 is a perspective view of part of a stator with a cooling tube extending there through being slit by said tool; and
Fig. 3 is a perspective view of part of a stator with a slit cooling tube being pulled out.

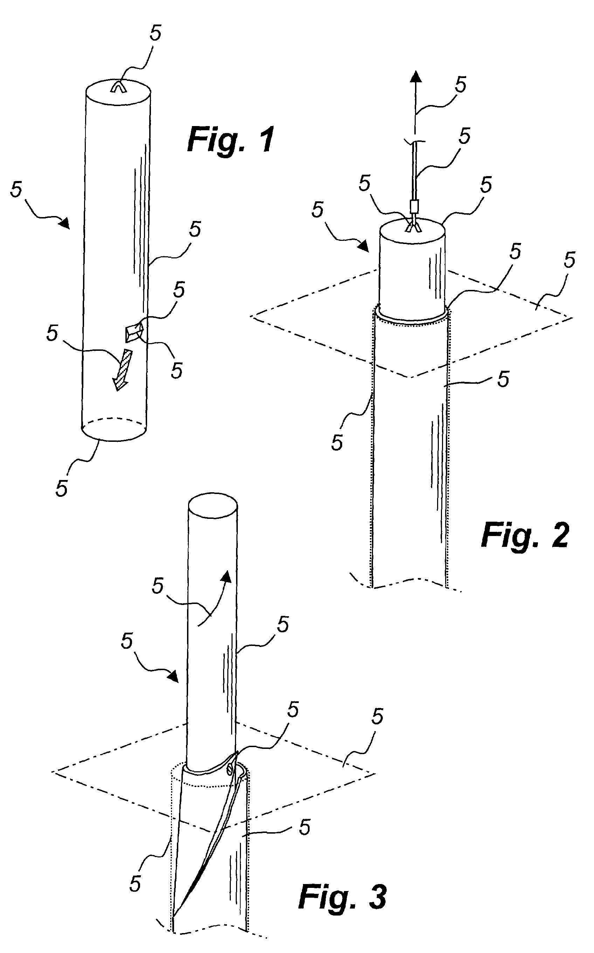

In the drawing the stator of a high-voltage rotating electric machine is denoted 4 and is represented by a square in dashed and dotted lines. The stator 4 has several stator teeth extending in parallel and surrounding a rotor (not shown) of the electric machine. One of said teeth, an upper end of which is shown in figs. 2 and 3, is denoted 3. In the tooth 3 and extending in a straight line from the shown upper end of the tooth 3 to a lower not shown end thereof is a duct 2 having a circular cross section.

Inside the duct 2 a cooling tube 1 is mounted. The tube 1 is made of a polymer material and normally runs in loops between the teeth 3 of the stator 4 and is connected to a cooling device (not shown). In the drawing, however, the tube 1 has been cut close to both the upper and lower ends of the stator tooth 3. The reason for that is that the tube 1 is to be dismantled due to a failure, such as a leak.

For the dismantling a cutting tool 5 according to the invention is used. The cutting tool 5 is shown in detail in fig. 1 and in use in fig. 2. It has an elongate body 10 with a circular cylindrical shape, an insertion or top end 13, and an open bottom end 12. The top end 13 is closed, a lug 14 being mounted thereon to be connected to a pull rope 15 (cf. fig. 2). The pull rope 15 is used to pull the tool through the tube 1 in a way described further down along a pulling direction (arrow a).

In a position approximately 2/3 down the tool 5 a cutting edge 6 protrudes from the cylindrical tool wall. The cutting edge 6 forms part of a plane-like structure including a shavings evacuation aperture 11 in said tool wall. The cutting edge 6 is not horizontal but inclined somewhat in order to impart the tool 5 a rotating movement when pulled through the tube 1. While being pulled through the tube 1 the cutting edge 6 carves a helical trench into the inner tube wall, the carved away shavings, schematically indicated by an arrow 16 in fig. 1, being led through the aperture 11 and leaving the tool 5 through its open bottom end 12.

After cutting said trench or, depending on the shape of the cutting edge, some other kind of slit into the inner tube wall, a rod 9 (cf. fig. 3) is inserted into the tube 1. The rod 9 is circular cylindrical and has a diameter inferior to the inner diameter of the tube 1. The rod 9 has at least one fastening means for attaching an end part of the cut tube 1 thereto. In the drawing the fastening means is a screw 8 which extends through said end part and is tightly secured to the rod 9.

When turning the rod 9 the cut tube 1 reduces its diameter by breaking along said trench or slit 7 as indicated in fig. 3. By reducing the tube diameter starting from the point of attachment to the rod 9 the tube 1 is gradually peeled off the inner wall of the duct 2. The peeled off and helically split tube is easy to pull out of the duct either gradually by turning and pulling the rod 9 at one time as indicated by the arrow b in fig. 3 or by pulling the rod 9 afterwards.

It is obvious to the skilled person that the method and the tool described above can be modified within the scope of the attached claims. For instance, one way of modifying the method is not to use a rod 9 but to use e.g. a plier to pull the slit tube out, and one way of modifying the tool 5 is to change the shape of the cutting edge 6, e.g. into a knife-edge extending substantially in parallel with the pulling direction a.

## Claims

1. A method of dismantling a cooling tube (1) of polymer material, said tube (1) being fixed in an axially running cooling duct (2) in a stator tooth (3) of a stator (4) of a high-voltage rotating electric machine, which has a winding comprising an insulation system including semi conducting layers, **characterised in that** said tube (1) is cut at an axial level close to the stator (4) at both ends of the stator tooth (3), that an elongate cutting tool (5) having a radially protruding cutting edge (6) is inserted into the cut tube (1) at one of said ends, that the cutting tool (5) is forced through the tube (1) along said duct (2) thereby slitting the tube (1) from inside, and that the slit tube (1) is pulled out of the duct (2) with a twisting movement that causes breakage of the tube wall along the slit (7) and thus reduction of the tube diameter.

2. Method according to claim 1, wherein the cutting tool (5) while being forced through the tube is rotated round its longitudinal axis in order to create a helical slit (7).

3. Method according to claim 1 or 2, wherein said twisting movement is caused by attaching a point (8) at an end of the helically slit tube (1) to a rod (9) inserted therein and by turning the rod (9) while pulling it out of said duct (2).

4. Cutting tool for facilitating dismantling of a cooling tube (1) of polymer material, said tube (1) being fixed in an axially running cooling duct (2) in a stator tooth (3) of a stator (4) of a high-voltage rotating electric machine, which has a winding comprising an insulation system including semi conducting layers, **characterised in that** it comprises an elongate body (10) which is insertable into said tube (1) and has a substantially radially protruding cutting edge (6) for cutting a slit (7) into the inner wall of said tube (1) while being forced through the latter.

5. Tool according to claim 4, wherein the cutting edge (6) forms part of a plane-like structure with a shavings evacuation aperture (11) in said elongate body (10) .

6. Tool according to claim 5, wherein said elongate body (10) is hollow and has a bottom opening (12) for said shavings.

7. Tool according to any one of claims 4-6, wherein said cutting edge (6) is inclined in order to impart a rotating movement to said elongate body (10) while the latter is being forced through said tube (1).

8. Tool according to any one of claims 4-7, wherein said elongate body (10) is circular cylindrical having a diameter fitting an inner diameter of said tube (1).
